# EUROPEAN PATENT APPLICATION

(11) **EP 2 901 870 A1**
(43) Date of publication of application: **05.08.2015**
(21) Application number: 15382016.2
(22) Date of filing: 28.01.2015
(51) Int. Cl.: A23L 1/318, A23L 1/315, A23L 1/01, A23B 4/005

(54) **Method for preparing and packaging roast chicken for its subsequent distribution**

(30) Priority: 30.01.2014 ES 201430117
(71) Applicant: Grupo Empresarial Palacios Alimentación, S.A., 26120 La Rioja (ES)
(72) Inventor: DomíÍnguez Iribarren, Pedro, 26120 LA RIOJA (ES)
(74) Representative: Isern-Jara, Nuria

(57) **Abstract**

Method for preparing and packaging roast chicken for subsequent distribution, which uses fresh chicken raw material from a slaughterhouse, properly cleaned and at a suitable temperature, characterised by the fact that it comprises the following stages:
A. Injection of a basic brine in the chicken raw material.
B. Marinade of the chicken raw material.
C. Oven-cooking or roasting the raw material.
D. Chilling.
E. Packaging the chicken raw material in a container.
F. Pasteurization of the chicken raw material.
G. Weighing and labelling of the container.
H. Chilling at a suitable temperature.
I. Packaging of the container of chicken raw material.
J. Storage at a suitable temperature.

## Description

### OBJECT OF THE INVENTION

The purpose of the invention herein is to register a method for preparing and packaging roast chicken for its subsequent distribution, which incorporates significant innovations and advantages when compared to techniques used up to the present time.

More specifically, the invention proposes the development of a method for preparing and packaging roast chicken for subsequent distribution, which by its particular arrangement, transforms fresh chicken raw material from a slaughterhouse into roast and packaged chicken, providing consistency, homogeneity and juiciness and being cooked to and retaining its golden brown colour, juiciness and original flavour typical of a traditional roast until its final consumption.

### BACKGROUND OF THE INVENTION

Different methods for preparing and packaging roast chicken are known in the current state of the art.

Roast chicken traditionally home-cooked and roasted has to be consumed in less than fifteen days, even if it has been refrigerated.

In an attempt to resolve said drawback, there are different methods for preparing and packaging chickens, in order to extend the shelf life until it is consumed.

Such methods can, on occasion, be improved significantly in respect of the final benefits typically provided by such roast chicken, and especially in respect of the shelf life to final consumption.

The invention herein contributes to troubleshooting and solving this problem, as the fresh, carved chicken pieces from a slaughterhouse can be transformed into roast and packaged chicken pieces, providing consistency, homogeneity and juiciness, being cooked to and retaining its golden brown colour, juiciness and original flavour typical of a traditional roast, and maintaining and preserving said properties for more time until its final consumption.

### DESCRIPTION OF THE INVENTION

The present invention has been developed to provide a method for preparing and packaging roast chicken for subsequent distribution, which uses whole fresh chicken raw material from a slaughterhouse, properly cleaned and at a suitable temperature, and is essentially characterised by the fact that it comprises the following stages:
A. Basic brine injection into the piece of chicken, using an injection system which injects an appropriate and precise amount of brine and evenly distributed, providing adequate consistency, homogeneity and juiciness to the chicken raw material.
B. Marinade of the chicken raw material with a specific and appropriate substance, and including specified and appropriate parameters of time and speed, giving the chicken raw material a particular flavour.
C. Oven-cooking or roasting the chicken raw material in an oven, with specified and appropriate parameters of time, oven temperature, condensation temperature and steam distribution.
D. Chilling to a suitable temperature.
E. Packaging of the chicken raw material in a container, with added oil.
F. Pasteurization of the chicken raw material housed in the container, in suitable time and temperature cycles.
G. Weighing and labelling of the container of chicken raw material.
H. Chilling at a suitable temperature.
I. Packaging of the container of the chicken raw material in boxes and corresponding labelling of the boxes.
J. Storage at a suitable temperature.

Preferably, during the method for preparing and packaging roast chicken for subsequent distribution, the legs of the chicken raw material are tied after marinating.

Additionally, during the method for preparing and packaging roast chicken for subsequent distribution, the legs of the chicken raw material (1) are tied (110) with a rubber band. Alternatively, during the method for preparing and packaging roast chicken for subsequent distribution, the oven wherein the oven-cooking or roasting is performed is linear, having an entry area and a different exit area, and said areas work with different and specific parameters in respect of time, oven temperature, and condensation temperature and distribution of steam.

Furthermore, during the method for preparing and packaging roast chicken for subsequent distribution, the oven-cooking time is between 30 and 45 minutes and the oven temperature is above 200°C.

Similarly, during the method for preparing and packaging roast chicken for subsequent distribution, the chilling is carried out using a suitable metal tape.

Additionally, during the method for preparing and packaging roast chicken for subsequent distribution, the chilling is carried out at a temperature below 60°C.

Preferably, during the method for preparing and packaging roast chicken for subsequent distribution, packaging is done in individual containers.

Additionally, during the method for preparing and packaging roast chicken for subsequent distribution, packaging is done in containers with a plurality of roast chicken raw materials.

Alternatively, during the method for preparing and packaging roast chicken for subsequent distribution, pasteurization is conducted in a cycle lasting substantially similar to 90 minutes, an ascending and descending exponential curve with a maximum temperature exceeding 90°C, and a time at maximum temperature exceeding 60 minutes.

Additionally, during the method for preparing and packaging roast chicken for subsequent distribution, the chilling is carried out at a temperature below 4ºC and for a time substantially similar to 60 minutes.

Preferably, during the method for preparing and packaging roast chicken for subsequent distribution, the chicken raw material comprises chicken pieces properly carved up.

Alternatively, during the method for preparing and packaging roast chicken for subsequent distribution, the chicken raw material comprises at least one whole chicken.

Container with roast chicken raw material inside, resulting from one of the methods described.

Thanks to the invention herein, the fresh chicken raw material from a slaughterhouse is transformed into roast chicken and packaged, providing consistency, homogeneity and juiciness, being cooked to and retaining its golden brown colour, juiciness and original flavour typical of a traditional roast.

Said qualities and properties can be maintained over an extended period until final consumption.

Other features and advantages of the method for preparing and packaging roast chicken for subsequent distribution will become obvious from the description of a preferred, though non-exclusive, embodiment, which is illustrated by means of a non-limiting example in the attached drawings, in which:

### BRIEF DESCRIPTION OF THE DRAWINGS

Figures 1 and 2 are two sequential schematic representations of two forms of preferred embodiment of the method for preparing and packaging roast chicken for subsequent distribution according to the invention herein.
Figure 3 is a schematic perspective view of a possible container resulting in a preferred form of embodiment of the method for preparing and packaging roast chicken for subsequent distribution according to the invention herein.

### DESCRIPTION OF A PREFERRED EMBODIMENT

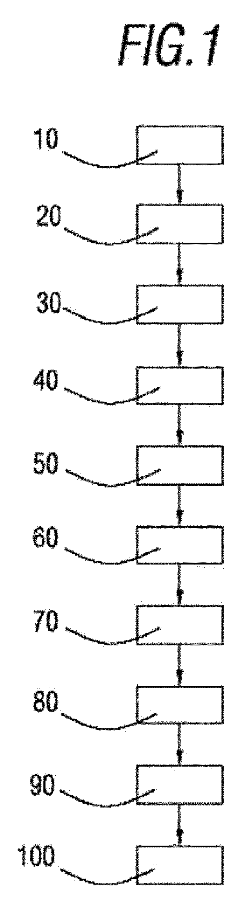

As shown in Figure 1, the method for preparing and packaging roast chicken for subsequent distribution, which uses fresh whole chicken raw material 1 from a slaughterhouse, properly cleaned and at a suitable temperature, and which comprises the following stages:
A. Basic brine injection 10 into the chicken raw material 1, using an injection system which injects an appropriate and precise amount of brine and evenly distributed, providing adequate consistency, homogeneity and juiciness to the chicken raw material 1.
B. Marinade 20 of the chicken raw material 1 with a specific and appropriate substance 21, and including specified and appropriate parameters of time and speed, giving the chicken raw material 1 a particular flavour.
C. Oven-cooking 30 or roasting the chicken raw material 1 in an oven 31, with specified and appropriate parameters of time, oven temperature 31 and condensation temperature and steam distribution.
D. Chilling 40 to a suitable temperature.
E. Packaging 50 of the chicken raw material 1 in a container 2, with added oil.
F. Pasteurization 60 of the chicken raw material housed in the container in suitable time and temperature cycles.
G. Weighing 70 and labelling of the container 2 of chicken raw material 1.
H. Chilling 80 at a suitable temperature.
I. Packaging 90 of the container 2 of the chicken raw material 1 in boxes and corresponding labelling on the boxes.
J. Storage 100 at a suitable temperature.

As depicted schematically in Figure 1, the method for preparing and packaging roast chicken for subsequent distribution of the invention herein, uses fresh whole chicken raw material 1 from a slaughterhouse, properly cleaned and at a suitable temperature.

In this form of a preferred embodiment as described, the chicken raw material 1 used are chicken pieces 11 properly carved in the slaughterhouse itself.

In other forms of preferred embodiments, the chicken raw material 1 used may be a whole chicken 12.

The chicken pieces 11 come from the cutting room and are supplied perfectly clean, gutted, without legs, neck, or tail end, with no bruising, and at a temperature below 3°C.

A common means for receiving the above could be, for example, in plastic crates stacked on pallets, and transported to the factory in refrigerated trucks having a temperature below 3°C and thoroughly clean and complying with the applicable regulations in respect of transport.

The pallets are heat shrink-wrapped with plastic film. During the offloading process, all the necessary health and safety conditions will be complied with by performing checks on temperature, condition of the chicken, bruising, cleanliness, feathers, etc., discarding any product not meeting established conditions.

Similarly, spices and other ingredients and elements necessary for preparing and packaging chicken pieces 11 are also received.

After proper reception of the chicken pieces 11, a basic mixture of brine 10 is injected into the chicken pieces.

The brine comprises water and a high salt concentration, and the purpose of which is to adequately preserve and cure food, in this case the chicken pieces 11.

The brine 10 is injected once the chicken pieces 11 have been conveniently unloaded and removed from the boxes which uses an injection system which injects an appropriate and precise amount of brine and evenly distributed, providing adequate consistency, homogeneity and juiciness to the chicken pieces 11.

This provides more consistency, homogeneity and juiciness to the product.

The injection system is not the subject of the present invention, and may be any of those known in the state of the art, and is not shown in the drawings.

After the injection 10 of brine, the chicken pieces 11 are transferred to stainless steel cutter trolleys, where the chicken pieces 11 that have already been injected 10 with brine are placed.

After the injection 10 of brine, a marinade 20 of the chicken pieces 11 is carried out with a specific and appropriate substance 21, and including specific and appropriate parameters of time and speed, giving the chicken pieces 11 a particular flavour.

Said marinade 20 is made using said specific and suitable substance 21, which gives the chicken pieces 11 their own unique flavour, as provided by the traditional flavour of roast chicken.

The marinade 20 is made with the stainless steel cutter trolleys filled the with chicken pieces 11 having been already injected with brine, and placed in a massage and rotary maceration drum, with known parameters of time and speed, previously tested, that contribute to gently massaging the 11 chicken pieces, which does not affect the integrity of the chicken 11 pieces, but the meat becomes adequately tender and the marinade is evenly distributed in the chicken pieces 11, and the right amount of seasoning is added.

In this form of a preferred embodiment, the specific and appropriate substance 21 used in the marinade 20 to give the chicken pieces 11 their unique flavour, as provided by the traditional flavour of roast chicken, is a suitable mixture of the following ingredients:
- Sunflower oil
- Water
- Garlic
- Pepper
- Wine
- Salt
- Vinegar
- Spices
- Soy Protein
- Dextrose

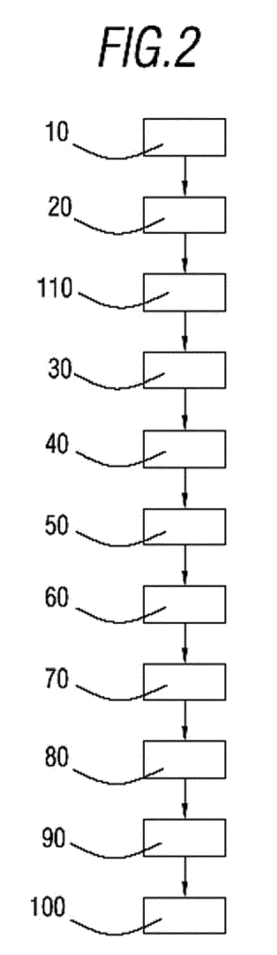

In one form of a preferred embodiment, after marinating 20 the chicken pieces 11, they come out of the drum through a lift, and are placed on a table where the legs are tied 110 with a rubber band, as shown schematically in Figure 2.

Then, the tied chicken pieces 11 are placed in a roasting oven 31 (not shown in the drawings), wherein the oven-cooking 30 or roasting of the chicken pieces 11 takes place, with specified and appropriate parameters of time, temperature, condensation temperature and steam distribution.

In this form of preferred embodiment, the chicken pieces 11 are oven-cooked 30 in a linear oven, which has two separate areas: entry area and exit area.

These two areas of the oven 31 can be adjusted separately by setting specific parameters of time, temperature, condensation temperature and steam distribution, different for each area. By regulating these parameters separately in the two zones of the same oven 31, the chicken pieces 11 are "sealed", creating a surface layer that retains the chicken juices inside while maintaining it original flavour.

This separate control further means the golden brown colour and appropriate juiciness of a traditional roast is achieved.

In this form of a preferred embodiment, the basic parameters for the oven-cooking process 30 are the time (between 30 and 45 minutes) and temperature (over 200°C) that are necessary in order to achieve the required roasting.

After the oven-cooking 30, chilling 40 is carried out to a suitable temperature, placing a metal tape for chilling, wherein the chicken pieces 11 that have been roasted are cooled below 60°C.

After the temperature 40 is lowered, the roast chicken pieces 11 are packed 50, via a packaging machine into individual packs, where a small amount of oil is added, resulting in a package 2 with the roast chicken piece 11 housed therein. Said addition of oil, together with the chicken juices retained in the oven-cooking process 50, make a sauce.

In other forms of embodiment, the packaging can be done in containers 2 with a plurality of roast chicken pieces 11 inside.

In this form of a preferred embodiment, the packaging machine corresponds to those known in the state of the art, and is not shown in the drawings.

After packaging 50 the chicken pieces 11, pasteurization 60 of the chicken pieces 11 housed inside the container 2 is conducted in suitable time, temperature and pressure cycles.

Said times and temperature and pressure cycles are suitable for achieving a good balance between flavour and tenderness of the meat as well as obtaining the right amount of sauce.

In this form of a preferred embodiment, the basic parameters of this pasteurized product 60 are:
- Production cycle of approximately 90 minutes.
- Rising and falling exponential curve with a maximum temperature exceeding 90°C.
- Time at maximum temperature exceeding 60 minutes.

After pasteurization 60, weighing 70 and labelling of the resulting container 2 is carried out with the chicken pieces 11 inside.

Following weighing 70 and labelling, blast cooling 80 at a suitable temperature is carried out, in a suitable cold room with forced ventilation and in spiral motion until a product temperature below 4°C is achieved.

Chilling 80 is carried out for about 60 minutes, such that the chicken pieces 11 lose the internal heat, thereby producing a regular and homogeneous product.

At the outlet of said forced cooling coil after said chilling 80, containers 2 with the chicken pieces11 in boxes are packaged, with their corresponding box label.

Subsequently, the packed boxes are conveniently stacked on pallets heat shrink-wrapped with flexible plastic film, and stored 100 at a proper temperature in a storage chamber for finished products, where the product awaits dispatch, as long as the different quality analysis are considered final.

The transport of packages 2 with the chicken 11 pieces finished and packaged until reaching the client's premises is carried out in fully refrigerated trucks with a temperature below 4°C and complying with all applicable legislation.

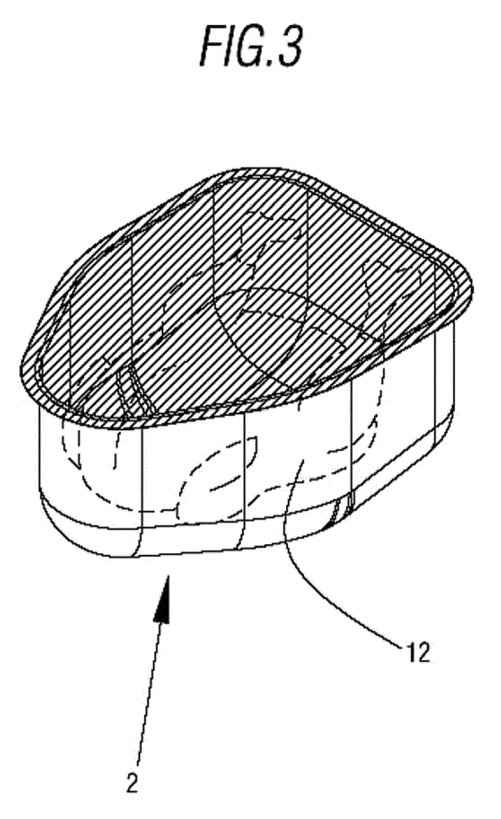

As shown schematically in Figure 3, as a result of the method for preparing and packaging roast chicken for subsequent distribution according to the present invention, a container 2 made of plastic material is obtained.

In the preferred form of embodiment shown schematically in Figure 3, the chicken raw material 1 used is a whole chicken 12 (represented by broken lines in Figure 3).

The container 2 shows the whole roast chicken 12 inside and ready for subsequent distribution and marketing. The properties of such whole roast chickens 12 are golden brown, juiciness, preserved shelf life, cured and appropriate and proper flavour, while keeping all the juices from the chicken.

The method for preparing and packaging roast chicken for subsequent distribution according to the invention herein transforms fresh chicken raw material 1 from a slaughterhouse into roast chicken and packaged, providing consistency, homogeneity and juiciness, being cooked to and retaining its golden brown colour, juiciness and original flavour typical of a traditional roast until final consumption.

The container 2 obtained as a result of the method of the present invention maintains the aforementioned properties and qualities of the chicken prepared and roasted therein for at least sixty days, obviously within a much longer shelf life than the maximum fifteen days for chickens traditionally cooked and roasted in the home and kept in a refrigerator.

The details, shapes and dimensions and other accessory elements as well as the materials used in the method for preparing and packaging roast chicken for subsequent distribution according to the invention may be conveniently replaced by others which are technically equivalent and do not depart from the essential nature of the invention or from the scope defined by the claims provided hereinafter.

## Claims

1. Method for preparing and packaging roast chicken for subsequent distribution, which uses fresh chicken raw material from a slaughterhouse, properly cleaned and at a suitable temperature, **characterised by** the fact that it comprises the following stages:
A. Basic brine injection (10) into the chicken raw material (1), using an injection system which injects an appropriate and precise amount of brine and evenly distributed, providing adequate consistency, homogeneity and juiciness to the chicken raw material (1).
B. Marinade (20) of the chicken raw material (1) with a specific and appropriate substance (21), and including specified and appropriate parameters of time and speed, giving the chicken raw material (1) a particular flavour.
C. Oven-cooking (30) or roasting the chicken raw material (1) in an oven (31), with specified and appropriate parameters of time, oven temperature (31), condensation temperature and steam distribution.
D. Chilling (40) to a suitable temperature.
E. Packaging (50) of the chicken raw material (1) in a container (2), with added oil.
F. Pasteurization (60) of the chicken raw material (1) housed in the container (2) in suitable time and temperature cycles.
G. Weighing (70) and labelling of the container (2) of chicken raw material (1).
H. Chilling (80) at a suitable temperature
I. Packaging (90) of the container (2) of the chicken raw material (1) in boxes and corresponding labelling of the boxes.
J. Storage (100) at a suitable temperature.

2. Method for preparing and packaging roast chicken for subsequent distribution according to the preceding claim, **characterised by** the fact that the legs of the chicken raw material (1) are tied (110) after marinating (20).

3. Method for preparing and packaging roast chicken for subsequent distribution according to claim 2, **characterised by** the fact that the legs of the raw material (1) are tied (110) with a rubber band.

4. Method for preparing and packaging roast chicken for subsequent distribution according to claim 1, **characterised by** the fact that the oven (31) wherein the oven-cooking (30) or roasting is performed is linear, having an entry area and a different exit area, and said areas work with different and specific parameters in respect of time, oven temperature, condensation temperature and steam distribution.

5. Method for preparing and packaging roast chicken for subsequent distribution according to claim 1 or 4, **characterised by** the fact that the oven-cooking time (30) is between 30 and 45 minutes and the temperature of the oven (31) is above 200°C.

6. Method for preparing and packaging roast chicken for subsequent distribution according to claim 1 **characterised by** the fact that the chilling (40) is carried out using a suitable metal tape.

7. Method for preparing and packaging roast chicken for subsequent distribution according to claim 1 or 6, **characterised by** the fact that the chilling (40) is carried out at a temperature below 60°C.

8. Method for preparing and packaging roast chicken for distribution according to claim 1, **characterised by** the fact that the packaging (50) is done in individual containers (2).

9. Method for preparing and packaging roast chicken for distribution according to claim 1, **characterised by** the fact that packaging (50) is done in containers (2) having a plurality of roast chicken raw materials (1).

10. Method for preparing and packaging roast chicken for subsequent distribution according to claim 1, **characterised by** the fact that pasteurization (60) is conducted in a cycle lasting substantially similar to 90 minutes, an ascending and descending exponential curve with maximum temperature exceeding 90°C, and a time at maximum temperature exceeding 60 minutes.

11. Method for preparing and packaging roast chicken for subsequent distribution according to claim 1, **characterised by** the fact that the chilling (100) is carried out at a temperature below 4°C and in a time substantially similar to 60 minutes.

12. Method for preparing and packaging roast chicken for subsequent distribution according to claim 1, **characterised by** the fact that the raw material (1) comprising chicken pieces (11) is properly carved.

13. Method for preparing and packaging roast chicken for subsequent distribution according to claim 1, **characterised by** the fact that the raw material (1) comprises at least one whole chicken (12).

14. Container with roast chicken raw material inside, resulting from one of the preceding claims.
